# EUROPÄISCHE PATENTANMELDUNG

(11) **EP 0 628 759 A1**
(43) Veröffentlichungstag der Anmeldung: **14.12.1994**
(21) Anmeldenummer: 94107160.7
(22) Anmeldetag: 06.05.1994
(51) Int. Cl.: F16L 7/00

(54) **Gleitkufenring und Verfahren zu seiner Herstellung**

(30) Priorität: 08.05.1993 DE 4315322
(71) Anmelder: Wissmann, Friedbert, 72764 Reutlingen (DE); Saar-Gummiwerk GmbH, D-66687 Wadern (DE)
(72) Erfinder: Wissmann, Friedbert, D-56130 Bad Ems (DE); Kientz, Paul, D-66687 Wadern (DE); Skerra, Bernd, D-72116 Mössingen (DE)
(74) Vertreter: Steimle, Josef, Dipl.-Ing.

(57) **Zusammenfassung**

Bekannte Gleitkufenringe werden aus mehreren zusammensetzbaren Ringsegmenten gebildet liegen häufig nicht vollflächig auf dem Medienrohr auf, was zu Deformierungen des Medienrohres führen kann; häufig müssen Hafteinlagen verwandt werden.

Unter Einbeziehung der bisher verwendeten Ringsegmente wird ein band- oder bandagenartiger Grundkörper (6,8) gummielastisch ausgebildet, einseitig mit Gleitkufen (3) bzw. den bisherigen Ringsegmenten (2), die mit Trennfugen (22) versehen werden, bestückt und zur Bevorratung aufgerollt. Von dieser Rolle werden bedarfsgemäß Teillängen (11,12) abgerollt und abgeschnitten, an ihren beiden Enden mit Verschlußorganen (18,19) versehen und auf die Gleitkufen (3) Gleitkufenschuhe (23) mit der notwendigen Steghöhendifferenz aufgesteckt, wobei sowohl die Gleitkufen (3), die Ringsegmente (2), die Verschlußorgane (18,19) als auch die Gleitkufenschuhe (23) durch einen Schweiß- oder Vulkanisationsvorgang unter Anwendung von Wärme und / oder Druck sowie einem Haftvermittler mit dem Grundkörper (6,8) bzw. den Gleitkufen (3) verbunden werden. Es entsteht so ein einteiliger, einen einzigen Verschluß aufweisender, gummielastischer Gleitkufenring, der auf dem Medienrohr (17) unter Zugspannung festsetzbar ist.

## Beschreibung

Die Erfindung betrifft einen Gleitkufenring für Rohr-in Rohr-Systeme, Rohrdurchführungen od. dgl. sowie das Verfahren zu seiner Herstellung. Der Gleitkufenring ist auf seinem Rücken mit parallel und im Abstand voneinander axial verlaufenden Gleitkufen versehen, deren Material einen möglichst geringen Reibungskoeffizienten aufweist, beispielweise ein Polyethylen, Poyamid od. dgl. ist, wobei der Gleitkufenring auf dem Medienrohr festsetzbar ist und dieses im Schutzrohr, der Durchführung od. dgl. führt bzw. zentriert.

Gleitkufenringe der vorbeschriebenen Art bestehen nach der DE-PS 26 47 235 aus zwei, drei oder mehreren, aus Kunststoff gefertigten und miteinander verbindbaren, mit vorspringenden Gleitkufen versehenen Ringsegmenten, die an beiden Enden Flansche aufweisen, die niedriger als die Gleitkufen und mit Öffnungen zum Hindurchführen von Verbindungsorganen versehen sind. Diese relativ starren Ringsegmente bewirken, daß ein größeres Sortiment unterschiedlich gekrümmter und / oder langer Ringsegmente auf Vorrat gehalten werden muß, um Rohre unterschiedlicher Durchmesser bestücken zu können. Zusätzlich werden aus verschiedenen Gründen Gleitkufenringe mit hohen und niedrigen Gleitkufen benötigt, so daß wegen der unterschiedlichen Gleitkufenhöhe weitere unterschiedliche Ringsegmente bereitgestellt werden müssen. Der aus den starren Ringsegmenten zusammenzusetzende Gleitkufenring liegt mit seiner Innenseite häufig nicht exakt auf der Außenseite des Medienrohres auf, wodurch insbesondere dünnwandige Rohre und Rohre aus weicheren Materialien, z. B. Kunststoffrohre, im Bereich der Gleitkufenringe deformiert werden können.

Diesem Nachteil soll nach der DE 91 14 077 U1 dadurch begegnet werden, daß die Gleitkufen auf einem elastisch biegbaren Ringsegmentkörper ausgebildet und durch aufsteckbare Verlängerungskufen in ihrer radialen Länge vergrößerbar sind. Dabei weisen die Ringsegmentkörper entlang ihrer Längsränder Auflageflächen für Spannbänder auf und die Flansche der Ringsegmentkörper sind hierzu an ihren Enden jeweils mit mindestens einer hinterschnittenen Aufnahmenut für mindestens ein Spannband versehen. Diese relativ dünnwandigen Ringsegmentkörper aus Kunststoff weisen zwar gegenüber den zuerst beschriebenen Segmenten eine geringere Steifigkeit auf, jedoch kann durch ihre begrenzte Biegbarkeit nicht sichergestellt werden, daß den Ringsegmentkörpern gebildete Gleitkufenring mit seiner Innenseite das Medienrohr vollflächig umschließt, wodurch auch hier Deformierungen des Medienrohres im Bereich des Gleitkufenringes nicht ausgeschlossen werden können.

Nach der DE-GM 76 35 629 ist ein weiterer, aus einzelnen Segmenten zusammensetzbarer Gleitkufenring bekannt, bei dem die Gleitkufen aus einem Material gefertigt sind, daß sich durch seine mechanischen Eigenschaften von dem die anderen Teile der Ringkörpersegmente bildenden Material unterscheidet. Hierzu wird der Körper der Ringsegmente aus einem relativ zähen und biegbaren Kunststoffmaterial gefertigt, das aber keine günstigen Abriebeigenschaften aufweist, während die Gleitkufen aus einem anderen Kunststoff mit günstigeren mechanischen Eigenschaften gefertigt werden, wobei die ganzen Ringsegmente mit den unterschiedlichen Kunststoffmaterialien in einem einzigen Guß- oder Spritzgußvorgang hergestellt werden. Auch durch diese sich in der Praxis bewährten Gleitkufenringe kann bekanntlich nicht sichergestellt werden, daß die Innenseite der Gleitkufenringe stets exakt auf dem Medienrohr aufliegt und eine Deformation dünnwandiger Rohre oder von Rohren aus weicherem Material verhindert wird. Darüber hinaus sind auch bei diesem, aus Einzelsegmenten zusammenzusetzenden Gleitkufenring ebenso wie bei den zuvor beschriebenen Gleitkufenringen sogenannte Hafteinlagen, insbesondere bei Rohren mit sehr glatter Oberfläche, zu verwenden.

Durch die DE 26 47 235 C2 ist ein Distanzhalter für durch Schutzrohre hindurchgeführte Rohre bekannt bestehend aus einem Ringkörper, der aus mehreren, aus Kunststoff gefertigten und miteinander fest verbindbaren, mit Gleitkufen bildenden Vorsprüngen versehenen Ringsegmenten zusammengesetzt ist, die an beiden Enden Flansche mit Verbindungsöffnungen aufweisen, wobei die Flansche eine kleinere Höhe als die Gleitkufen haben und an ihnen jeweils mindestens eine gezahnte Keilfläche oder Anlagefläche für nichtmetallische gezahnte Spannkeilorgane, welche die Verbindungsorgane zwischen der einzelnen Ringsegmenten bilden, vorgesehen ist und die Ringsegmente Ausnehmungen zur Aufnahme mindestens eines zusätzlichen Anfangsverbindungsorganes als Montagehilfsmittel aufweisen. Auch bei diesem, aus einzelnen Kunststoff-Ringsegmenten zusammensetzbaren Gleitkufenring bilden sich ebenso wie bei den vorherbeschriebenen Gleitkufenringen im Bereich der Ringsegmentverbindungen äußerst starre Bereiche aus, die ein exaktes Aufliegen der Gleitkufenring-Innenseite auf dem Medienrohr verhindern, keiner Gewähr dafür bieten, daß dünnwandige Rohre oder Rohre aus weicherem Material nicht deformiert werden, wobei auch bei dieser Ausführungsform häufig Hafteinlagen verwendet werden müssen.

Aus dem DE-Prospekt "FP-Gleitkufen (System raci)", FP Franken Plastik, 90763 Fürth/DE ist ein aus Einzelsegmenten zusammensetzbarer Gleitkufenring bekannt, dessen Einzelsegmente aus einein relativ dünnwandigen Kunststoff bestehen, wodurch die Segmente eine hohe Flexibilität erhalten und sich gut an den Außenumfang des Medienrohres anpassen. Die einzelnen Segmente sind an ihrem einen Ende auf der Oberseite und an ihrem anderen Ende auf ihrer Unterseite mit hinterschnittenen Zähnen versehen, über die die einen Gleitkufenring bildenden Segmente ineinandergesteckt und verbunden werden. Das so gebildete Segmentband wird um das Medienrohr herumgelegt und durch Zusammenstecken seiner beiden Enden zu einem Ring geschlossen. Danach wird jede Segmentverbindung mittels eines Spezial-Spannwerkzeugs verspannt und der Gleitkufenring auf dem Medienrohr nicht mehr lösbar festgesetzt, häufig unter Mitverwendung einer Hafteinlage. Die eigentlichen Gleitkufen sind bei dieser Konstruktion in mehrere, in Rohrlängsrichtung hintereinander angeordnete Gleitnoppen aufgeteilt, wobei die Noppen einer Reihe durch einen dünnen Steg miteinander verbunden sind. Die relativ dünnwandigen Kunststoffsegmente bewirken zwar eine hohe Flexibilität, begrenzen aber auch die möglichen Steghöhen. Darüber hinaus konnte insbesondere bei langen Rohrstrecken ein Abknicken der Gleitnoppen beobachtet werden. Ebenso nachteilig ist, daß für jeden Segmenttyp ein eigenes Spannwerkzeug verwendet werden muß und die Ringposition nach dem Verspannen der Segmente nicht mehr korrigiert werden kann, es sei denn man zerstört den Gleitkufenring.

Aufgabe der Erfindung ist es nun, unter Einbeziehung der bisher verwendeten Kunststoff-Einzelsegmente einen einteiligen, notfalls zwei-, drei- oder mehrteiligen Gleitkufenring zu schaffen, der die vorbeschriebenen Nachteile vermeidet, ein Höchstmaß an Flexibilität bei großer Stabilität aufweist, montagefreundlich ist, und bei dem der Aufwand für Herstellung und Unterhalt der Formen minimiert werden kann; gleichzeitig soll die Erfindung das Verfahren zur Herstellung des erfindungsgemäßen Gleitkufenringes aufzeigen und angeben, aus welchen Materialien der Gleitkufenring gefertigt werden soll.

Die Erfindung löst diese Aufgabe bei einem Gleitkufenring der vorbeschriebenen Art dadurch, daß die einander benachbarten Gleitkufen eines Gleitkufenringes, die Gleitkufen eines Ringsegments bzw. die einander benachbarten Ringsegmente durch einen elastischen, flexiblen, dehnbaren und rückstellbaren Teil verbunden sind, daß dieser Teil gummielastisch ausgebildet und mit den Gleitkufen bzw. mit den Gleitkufen eine Einheit bildenden Kunststoffschalen und / oder den Ringsegmenten durch einen Schweiß- bzw. einen Vulkanisationsvorgang und / oder mechanisch verbunden ist wobei der Gleitkufenring entweder einteilig, einen einzigen Verschluß aufweisend ausgebildet und ein definierter Abschnitt eines zu einer Rolle aufgewickelten band- oder bandagenartigen, gummielastischen Grundkörpers oder zwei-, drei- bzw. mehrteilig, mehrere Verschlüsse aufweisend ausgebildet und das Gleitkufenringteil ein anderer definierter Abschnitt des zu einer Rolle aufgewickelten, gummielastischen Grundkörpers ist, von dein bedarfsgemäß die definierten Teile abrollbar und abschneidbar und an beiden Enden mit je einem Verschlußstück versehbar sind, durch das entweder das einteilige, offene Gleitkufenband auf dem Medienrohr zu einem einen einzigen Verschluß aufweisenden Gleitkufenring oder die Grundkörpersegmente über ihre Verschlußstücke zu einem offenen Gleitkufenband zusammensetzbar und auf dem Medienrohr durch Verbinden der beiden letzten Verschlußstücke zu einem zwei-, drei- oder mehrere Verschlüsse aufweisenden Gleitkufenring ausbildbar und unter Zugspannung festsetzbar ist.

Um sicherzustellen, daß der vorbeschriebene Gleitkufenring auch dann weitestgehend vollflächig an dem Medienrohr anliegt, wenn die bisher verwendeten und mit Gleitkufen versehenen Kunststoffschalen verwandt und mit dem band- oder bandagenartigen, gummielastischen Grundkörper verbunden werden, sieht die Erfindung vor, daß nach dem Verbinden der Kunststoffschalen mit dem Grundkörper zwischen den Gleitkufen einerseits und der Gleitkufe und dem Verschlußstück andererseits einer jeden Kunststoffschale Trennfugen wählbarer Breite, den Grundkörper nicht verletzend, anbringbar sind, wodurch jede Kunststoffschale in zwei, drei oder mehrere Schalensegmente aufteilbar ist

Die Verschlußstücke sind mit Augen aufweisenden Ösen versehene, vorzugsweise gummielastische Leisten, die über ihnen zugeordnete Streifen mit den Enden des Grundkörpers bzw. denjenigen wer Grundkörpersegmente durch einen Schweiß- oder einen Vulkanisationsvorgang unter Anwendung von Wärme und / oder Druck sowie unter Mitverwendung eines Haftvermittlers verbindbar sind. Die Augen beinhaltenden Ösen der Verschlußstücke bzw. Leisten sind so geformt, das sie in montiertem Zustand des Gleikufenringes außerhalb der Auflagefläche des Medienrohres angeordnet sind, wobei in die Ösen gegebenenfalls Augen darstellende, die Ösen aussteifende Hülsen eingebettet sind, die vorzugsweise aus einem nichtleitenden Material bestehen.

Die Verschlußstücke bzw. Leisten bestehen vorzugsweise aus dem Material des Grundkörpers und sind auf der Rückseite des ihnen zugeordneten Streifens mit einer Auflage versehbar, die auch ein Haftvermittler sein kann, über die sie durch einen Schweiß- oder Vulkanisationsvorgang unter Anwendung von Wärme und / oder Druck einerseits mit der Auflage selbst und andererseits mit den Enden des einteiligen Grundkörpers bzw. mit den Enden der Grundkörpersegmente verbindbar sind; die Leiste sowie die Verbindungs- bzw. Verschlußstücke können aber auch aus dem Material der Gleitkufen oder demjenigen der Kunststoffschalen gefertigt sein.

Die Steghöhe der Gleitkufen wird unter Einschluß der Dicke des Grundkörpers bzw. derjenigen der Grundkörpersegmente oder der Dicke des Grundkörpers und derjenigen der Kunststoffschalen definiert als kleinstmögliche Steghöhe und alle anderen Steghöhen werden dadurch erreicht, daß auf die Gleitkufen ansich bekannte Gleitkufenschuhe mit wählbarer Steghöhe aufgesteckbar und mit den Gleitkufen vorzugsweise durch einen Schweiß- oder Vulkanisationsvorgang unter Anwendung von Wärme und / oder Druck, gegebenfalls unter Mitverwendung eines Haftvermittlers, verbindbar sind.

Nach einer anderen Ausgestaltung der Erfindung ist der endlose, band- oder bandagenartige, gummielastische, zu einer Vorratsrolle aufgewickelte Grundkörper auf seiner Oberseite mit einer definierten Anzahl von im Querschnitt pilzartigen Noppen versehen, die in definiertem Abstand voneinander angeordnet sind, während die Gleitkufen bzw. die Kunststoffschalen mit dein Querschnitt, der Anzahl und der Anordnung der Noppen kongruenten Öffnungen versehen und über diese, gegebenenfalls unter Mitverwendung eines Haftvermittlers und / oder durch einen Schweiß- oder Vukanisationsvorgang mit dem Grundkörper verbindbar sind. Dabei ist u.a. vorgesehen, daß die Öffnungen der Gleitkufen bzw. der Kunststoffschalen im oberen Bereich eine Vergrößerung aufweisen, in die die hutartig vergrößerten Spitzen der Noppen einschnappen.

Dem die Gleitkufen verbindenden Teil, dem Grundkörper bzw. den Grundkörpersegmenten ist / sind gegebenenfalls ein, zwei, drei oder mehrere Längenausdehnunbgsbegrenzer zuordbar, wobei diese ( r ) der Ober- und / oder Unterseite des Teils, des Grundkörpers bzw. der Grundkörpersegmente zugeordnet oder in diese eingebettet ist / sind.

Um notfalls die Selbsthaftung der Gleitkufenringe auf insbesondere sehr glatten Medienrohren zu verbessern, sieht die Erfindung vor, daß die Unterseite des Grundkörpers mit sogenannten Saugnäpfen versehbar ist, die an der Unterseite angeformt, in diese eingeformt oder nachträglich an ihr anbringbar sind.

Weiterhin ist erfindungsgemäß vorgesehen, daß die Gleitkufen aus einem Polyethylen hoher Dichte (PE-HD), einem Polyethylenterephthalat (PETP), einem Polybutylenterephthalat (PBTP), einem Polypropylen od. dgl., oder einem Polyester auf der Basis von Ethylenglykol und 2,6-Naphthalindicarbonsäure, einem Polyarylat, beispielsweise auf der Basis von Diphenolen und aromatischen Dicarbonsäuren oder einem Polyester auf der Basis einer 4-Hydroxybenzoesäure als einheitlichem Monomeren bestehen, während das Ringsegment, das die Gleitkufen verbindende Teil, der Grundkörper und / oder die Grundkörpersegmente aus einem Elastomer, vorzugsweise einem Kautschuk, insbesondere einem Siliconkautschuk bestehen, wobei der Siliconkautschuk durch Carborane modifiziert sein kann. Ebenso ist vorgesehen, den die Gleitkufen verbindenden Teil aus einem Blockpolymer zu fertigen; auch ist es nach der Erfindung möglich, die Kunststoffschalen aus dem Material der Gleitkufen herzustellen.

Ein einteiliger, zwei-, drei- oder mehrteiliger Gleitkufenring wird erfindungsgemäß dadurch hergestellt, daß man die einander benachbarten Gleitkufen eines Gleitkufenringes, eines Ringsegments, einer Kunststoffschale od. dgl. durch einen elastischen, flexiblen, dehnbaren und rückstellbaren, gummielastischen Teil mittels eines Schweiß- oder Vulkanisationsvorgangs und / oder mechanisch verbindet, daß man den genannten Teil als endlosen, band- oder bandagenartigen Grundkörper ausbildet und diesen auf seiner Oberseite mit Gleitkufen bzw. mit Gleitkufen aufweisenden Kunststoffschalen versieht, daß man bei Verwendung von Kunststoffschalen diesen eine, zwei oder mehrere Trennfügen wählbarer Breite zuordnet, daß man den so mit Gleitkufen versehenen Grundkörper zu Zwecken der Lagerhaltung zu einer Rolle aufwickelt und von dieser bedarfsgemäß definierte Abschnitte abrollt, abschneidet und an beiden Enden mit je einem Verschlußstück versieht derart, daß man entweder ein einteiliges oder ein aus zwei, drei bzw. mehreren Grundkörpersegmenten zusammensetzbares, offenes Gleitkufenband erhält, das man auf dem Medienrohr durch Herstellen des einzigen Verschlussses zu einem einteiligen Gleitkufenring oder durch Verbinden der beiden letzten Verschlußstücke zu einem zwei-, drei- bzw. mehrteiligen Gleitkufenring schließt und unter Zugspannung festsetzt.

Dabei sieht die Erfindung vor, daß die Gleitkufen unter Einschluß der Dicke des Grundkörpers und derjenigen der gegebenenfalls verwendeten Kunststoffschalen die geringstmögliche Steghöhe aufweisen und die benötigte Steghöhe dadurch sichergestellt wird, daß auf die Gleitkufen Gleitkufenschuhe mit wählbarer Steghöhe aufgesteckt und mit den Gleitkufen durch einen Schweiß- oder Vulkanisationsvorgang und / oder mechanisch verbunden werden.

Der von der endlosen Vorratsrolle abgerollte und abgeschnittene definierte Abschnitt, durch den ein einteiliger Gleitkufenring gebildet werden soll, weist ebenso wie die definierten anderen Abschnitte, durch die ein zwei-, drei- oder mehrteiliger Gleitkufenring gebildet werden soll, in ungespanntem Zustand eine Länge auf, die um wenigsten die Breite von zwei Verschlußstücken kleiner ist als der Außenumfang bzw. der entsprechende Außenumfangsteil des mit Gleitkufen zu bestückenden Medienrohres.

Ebenso sieht die Erfindung vor daß man die Rückseite der Gleitkufen bzw. diejenige der Kunststoffschalen oberflächig erwärmt, mit der erwärmten Fläche auf die Oberseite des eventuell zuvor erwärmten Grundkörpers aufsetzt und derart mit dem Grundkörper verbindet, daß man unter bevorzugter Anwendung von Druck einen Schweiß- oder Vulkanisationsvorgang auslöst und, gegebenenfalls unter Mitverwendung eines Haftvermittlers, eines Vulkanisationsbeschleunigers und / oder eines Aktivators od. dgl., vollständig oder teilweise abschließt, daß man die Rückseite der Verschlußstücke, der Leisten bzw. diejenige der Verschlußleisten oberflächig erwärmt und mit einer eventuell zuvor erwärmten Auflage kaschiert derart, daß man unter bevorzugter Anwendung von Druck zwischen den die Gleitkufen verbindenden Teilen und der Auflage einen Schweiß- oder Vulkanisationsvorgang, gegebenenfalls unter Mitverwendung eines Haftvermittlers, eines Vulkanisationsbeschleunigers und / oder eines Aktivators, auslöst und vollständig oder teilweise abschließt, und daß die besagten Teile mit ihrer durch die Auflage kaschierten Fläche auf die Enden der Grundkörper bzw. diejenigen der Grundkörpersegmente aufsetzt und mit diesen unter eventuell erneuter Zufuhr von Wärme und Anwendung von Druck, notfalls unter Mitverwendung eines weiteren Haftvermittlers, durch Auslösen und Abschließen eines Schweiß- oder Vulkanisationsvorgangs verbindet, daß man die mit kleinstmöglicher Steghöhe ausgebildeten Gleitkufen oberflächig erwärmt und mit einer eventuell zuvor ebenfalls enwärmten und vorzugsweise die Seiten der Gleitkufenstege überdeckenden Auflage versieht dadurch, daß man unter Anwendung von Druck, gegebenenfalls unter Mitverwendung eines Haftvermittlers, eines Vulkanisationsbeschleunigers und / oder eines Aktivators einen Schweiß- oder Vulkanisationsvorgang auslöst und vollständig oder teilweise abschließt, und daß man dann auf die so vorbereiteten Gleitkufen ansich bekannte Gleitkufenschuhe aufsteckt, diese eventuell zuvor erwämt und unter Anwendung von Druck und notfalls erneuter Wärmezufuhr sowie gegebenenfalls unter Mitverwendung eines weiteren Haftvermittlers, eines Vulkanisationsbeschleunigers und / oder eines Aktivators mit den Gleitkufen verbindet durch Auslösen und Abschließen eines Vulkanisations- oder Schweißvorgangs.

Ein anderes Verfahrensmerkmal sieht vor, daß man auf der Oberseite des band- oder bandagenartigen, gummielastischen Grundkörper die bisher verwendeten, wenigstens eine Gleitkufe und zwei Verschlußleisten aufweisenden Kunststoffschalen mittels eines Vulkanisations- oder Schweißvorgangs festsetzt unter Anwendung von Wärme und / oder Druck, gegebenenfalls unter Mitverwendung eines Haftvermittlers, eines Vulkanisationsbeschleunigers und / oder eines Aktivators, daß man die Kunststoffschalen parallel zu ihren Gleitkufen mit Trennfugen wählbarer Breite, den Grundkörper nicht verletzend, versieht derart, daß man jede Kunststoffschale in zwei, drei oder mehrere Schalensegmente unterteilt und den so ausgebildeten Grundkörper zu Zwecken der Lagerhaltung zu einer Vorratsrolle aufwickelt und von dieser bedarfsgemäß so viele definierte Abschnitte abrollt und abschneidet, deren ungestreckte Länge derjenigen der Kunststoffschalen entspricht, wie mit Verschlußleisten versehene Grundkörpersegmente zur Herstellung von zwei-, drei- oder mehrteiligen Gleitkufenringen benötigt werden, daß man die einen Gleitkufenring bildenden Grundkörpersegmente auf der Baustelle lose miteinander über ihnen zugeordnete Verbindungsteile verbindet und das offene Segmentband um das Medienrohr herumlegt und durch Verschrauben bzw. Verkeilen der beiden letzten Verschlußleisten den Gleitkufenring schließt, und daß man dann die Schrauben mit zugehörigen Muttern bzw. die Keile in ihre Endposition bringt und den Gleitkufenring unter Zugspannung auf dem Medienrohr festsetzt.

Ein weiteres Merkmal der Erfindung sieht vor, daß man die einander benachbarten Gleitkufen aus hochfestem, verschleißarmen Kunststoff, der einen geringen Reibungskoeffizienten aufweist, ebenso wie die den Gleitkufen benachbarten Verschlußleisten durch einen gummielastischen Teil verbindet, wobei man die Verschlußleisten an diesem Teil derart anordnet, daß sie entweder durch Anformen an den Teil oder nachträgliches Verbinden mittels eines Schweiß- oder Vulkanisationsvorgangs unter Anwendung von Wärme und / oder Druck, gegebenenfalls unter Mitverwendung eines Haftvermittlers, eines Vulkanisationsbeschleunigers und / oder eines Aktivators, mit dem Teil eine bauliche Einheit bilden, und daß man die so gestalteten, mit Kunststoff-Gleitkufen versehenen, gummielastischen Ringsegmente auf der Baustelle zu ein-, zwei-, drei- oder mehrteiligen Gleitkufenringen zusemmensetzt und unter Zugspannung auf dem Medienrohr festsetzt.

Ebenso sicht die Erfindung vor, daß man die mit den Gleitkufen bzw. den Kunststoffschalen sowie den Verschlußstücken kaschierbare Auflage als Haftvermittler verwendet und in ihr unter Anwendung von Wärme und / oder Druck einen Schweiß- oder Vulkanisationsvorgang auslöst und gesteuert vollständig oder teilweise abschließt.

Weitere Ausgestaltungen der Erfindung sind den Patentansprüchen, den Abbildungen und deren Beschreibung zu entnehmen; es zeigt
- Fig. 1: einen einteiligen, einen einzigen Verschluß aufweisenden Gleitkufenring
- Fig. 2: eine mit Gleitkufen versehene Kunststoffschale, die nach ihrer Verbindung mit dem Grundkörper mit Trennfugen versehen worden ist
- Fig. 3: verschiedene Verschluß- bzw. Verbindungsstücke
- Fig. 4: eine mechanische Verbindung der Kunststoffschale mit dem Grundkörper
- Fig. 5: den zu einer Vorratsrolle aufgewickelten Grundkörper
- Fig. 6: einen dreiteiligen Gleitkufenring mit drei Gleitkufen
- Fig. 7: zwei Grundkörpersegmente eines mehrteiligen Gleitkufenringes mit gelenkigem Verbindungs- bzw. Verschlußstück
- Fig. 8: zwei Grundkörpersegmente mit einer Verschraubungs-Verbindung
- Fig. 9: zwei Grundkörpersegmente mit einer Verkeil-Verbindung
- Fig. 10: einen einteiligen Gleitkufenring mit daran angeordneten Längenausdehnungsbegrenzern
- Fig. 11: einen nicht zentrisch eingebauten Gleitkufenring mit unterschiedlichen Gleitkulen-Steghöhen

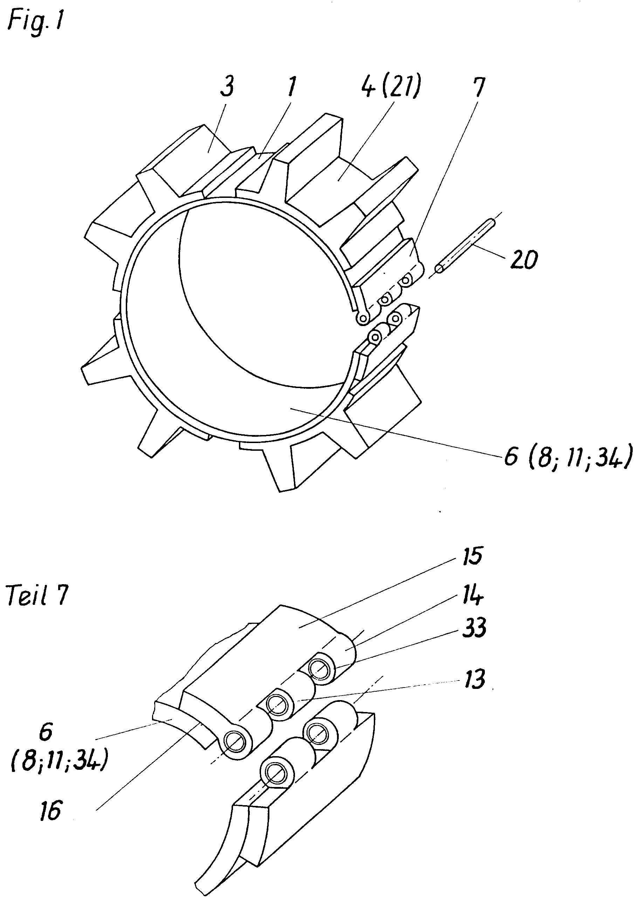

In Fig. 1 ist ein einteiliger, mit einer Anzahl Gleitkufen 3 versehener Gleitkufenring 1 dargestellt, bei dem die Gleitkufen 3 durch einen elastischen, flexiblen, dehhnbaren und rückstellbaren, insbesondere gummielastischen Teil 4 kraftschlüssig und zugfest verbunden sind. Die Teile 4 können dabei mit Gleitkufen versehene Kunststoffschalen 21 sein, die ihrerseits kraftschlüssig und zugfest mit einem Grundkörper 6 bzw. einem definierten Abschnitt 11 eines Grundkörpers 8 verbunden sind; die Teile 4 können aber auch der Grundkörper 6 bzw. der definierte Abschnitt 11 des Grundkörpers 8 selbst sein. Der Grundkörper 6, 8 ist zu diesem Zweck ebenfalls elastisch, flexibel, dehnbar, vorzugsweise rückstellbar und gummielastisch, band- oder bandagenartig ausgebildet. Seinen beiden Enden sind Verschlußstücke 7 zuordbar, die entweder werkstattseitig oder auf der Baustelle mit diesen kraftschlüssig und zugfest verbunden werden.

Die Verschlußstücke 7 bestchen z.B. aus dem Material des Grundkörpers und sind Leisten 15, die mit Augen 13 versehene Ösen 14 und einen Streifen 16 aufweisen, über den sie mit den Enden des Grundkörpers 6 bzw. des Abschnitts 11 des Grundkörpers 8 verbindbar sind. Die Ösen 14 der Leisten 15 sind so gestaltet, daß sie verzahnend ineinandergreifen und die Ösen 14 in montiertem Zustand vorzugsweise außerhalb der Auflagefläche des Medienrohres 17 angeordnet sind. In die Ösen 14 könnten Augen 13 darstellende Hülsen 33 eingebettet sein, die die Ösen 14 aussteifen; sie bestehen vorzugsweise aus einem nichtleitenden, hochfesten Material. Das aus dem einteiligen Grundkörper 6 bzw. dem definierten Abschnitt 11 gebildete Gleitkufenband 34 wird auf der Baustelle um das Medienrohr 17 herumgelegt und durch einen die Augen 13 der Ösen 14 durchdringenden Stab 20 zu einem Gleitkufenring 1 geschlossen und unter Zugspannung auf dem Medienrohr festgesetzt; dabei bilden die Augen 13 mit den Ösen 14 und dem Stab 20 einen gelenkigen Verschluß 18. Der Stab 20 besteht aus einem hochfesten Material, vorzugsweise einem nichtleitenden Werkstoff, so kann er z.B. aus einem Kunststoff, vorzugsweise einem glasfaserverstärkten, gegebenenfalls UV-stabilisierten Kunststoff bestehen.

Die gestreckte, ungespannte Länge des Grundkörpers 6 bzw. des definierten Abschnitts 11 des Grundkörpers 8 ist dabei wenigstens um das Breitenmaß von zwei Verschlußstücken 7 kürzer als der Außenumfang des Medienrohres 17; dabei kann die Längenausdehnungsfähigkeit des Grundkörpers bzw. des Abschnitts 11 durch Anbringen von Längenausdehnungsbegrenzern 5 auf ein vorherbestimmbares Maß begrenzt werden, wobei die Längenausdehnungsbegrenzer 5 auf der Ober- und / oder Unterseite des Grundkörpers 6 bzw. des Abschnitts 11 angeordnet oder in diese eingebettet sein kann.

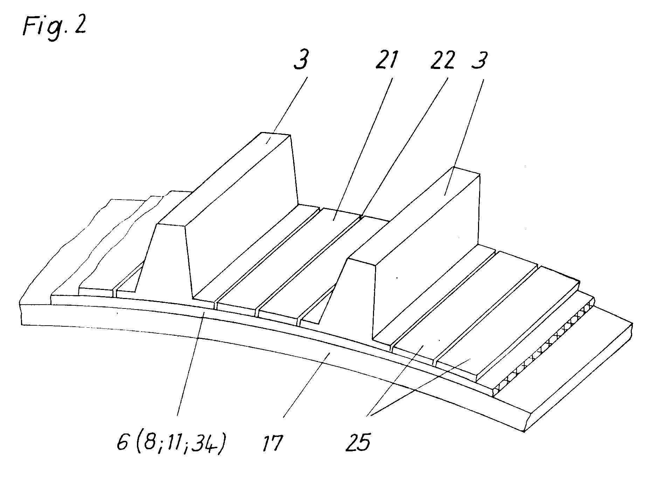

Fig. 2 zeigt die mit Gleitkufen 3 versehene Kunststoffschale 21, die kraftsschlüssig und zugfest mit dem Grundkörper 6 bzw. mit dem Abschnitt 11 verbunden ist. Zur besseren Anpassung der Kunststoffschale an die Außenfläche des Medienrohres 17 sind parallel zu den Gleitkufen 3 Trennfugen 22 wählbarer Breite angeordnet, die die Kunststoffschale in zwei, drei oder mehrere Schalensegmente 25 aufteilen.

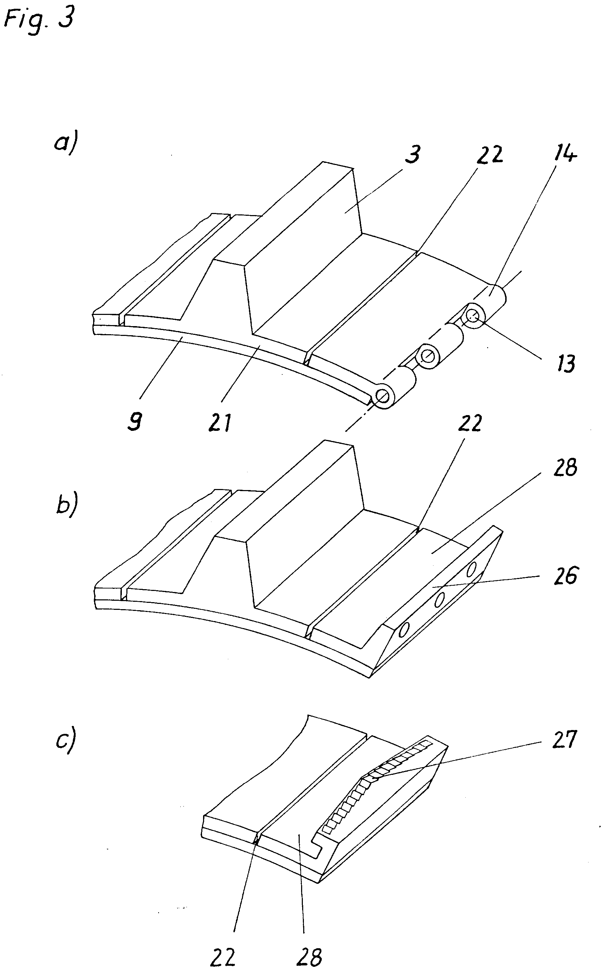

In Fig. 3 ist ein Grundkörpersegment 9 eines aus zwei, drei oder mehreren Grundkörpersegmenten zusammensetzbaren Gleitkufenringes dargestellt, das auf seiner Rückseite mit wenigstens einer Gleitkufe 3 oder mit wenigstens eine Gleitkufe 3 aufweisenden Kunststoffschale 21, 28 versehen ist. Dabei ist in Fig. 3 a das aus den Augen 13 und den Ösen 14 gebildete Verschlußstück 18 gezeigt, während Fig. 3 b die mit der Verschraubleiste 26 und Fig. 3 c die mit der Verkeilleiste 27 versehene Kunststoffschale 28 darstell. Den Darstellungen ist gemeinsam, daß die Kunststoffschalen 21, 28 mit einer oder mehreren Trennfügen 22 wählbarer Breite parallel zu den Gleitkufen 3 versehen sind.

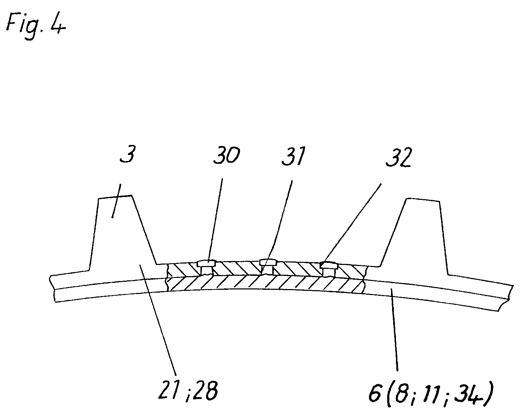

Fig. 4 zeigt den Abschnitt eines endlosen Grundkörpers 6, 8, der auf seiner Oberseite mit einer definierten Anzahl von im Querschnitt pilzartigen Noppen 30 versehen ist, die in definiertem Abstand voneinander angeordnet sind. Die auf dem Grundkörper 6, 8 festzusetzenden Gleitkufen 3 oder Kunststoffschalen 21, 28 weisen den Noppen 30 kongruente Öffnungen 31 auf, die in ihrem oberen Bereich mit einer Vergrößerung 32 versehen sind in die die hutartig vergrößerten Spitzen der Noppen 30 einschnappen; die Gleitkufen 3 bzw. Kunststoffschalen 21, 28 werden zugfest, gegebenenfalls unter Mitverwendung eines Haftvermittlers, mit dem Grundkörper 6, 8 verbunden.

Nach der Erfindung sind der Grundkörper 6, 8 und die Grundkörpersegmente 9, 10 gummielastisch ausgebildet und werden mit den Gleitkufen 3 bzw. den Kunststoffschalen 21, 28 unter Anwendung von Wärme und / oder Druck, gegebenenfalls unter Mitverwendung eines Haftvermittlers, durch einen Schweiß- oder Vulkanisationsprozeß verbunden: diese Methode kann auch unter Einbeziehung der vorbeschriebenen mechanischen Verbindung angewandt werden.

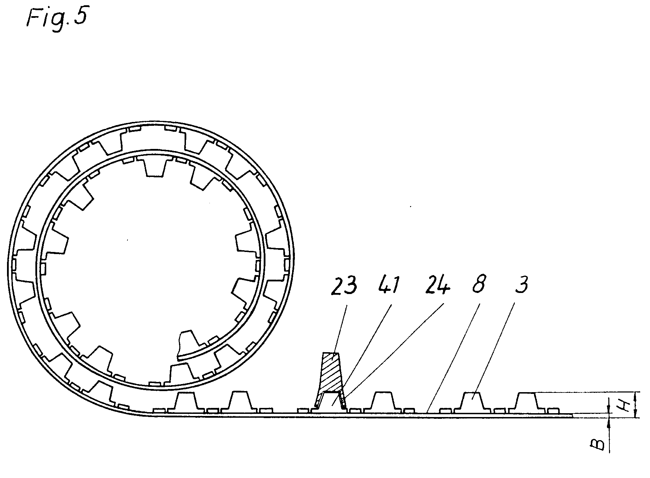

In Fig. 5 ist ein zu Zwecken der Lagerhaltung zu einer Vorratsrolle aufgewickelter Grundkörper 8 dargestellt; dessen Gleitkufen haben eine Steghöhe H, die unter Einschluß der Dicke B des Grundkörpers 8 die kleinstmögliche Steghöhe ist. Von dieser Rolle wird bedarfsgemäß ein definierter Abschnitt 11, der einem einteiligen Gleitkufenring 1 entspricht, abgerollt und abgeschnitten und die tatsächlich benötigte Steghöhe wird dadurch hergestellt, daß auf die Gleitkufen 3 eine die Seiten 39, 40 des Gleitkufensteges 41 überdeckende Auflage 24 aufgebracht und mit diesen unter Anwendung von Wärme und / oder Druck gegebenenfalls unter Mitverwendung eines Haftvermittlers, verbunden wird, daß dann auf die so vorbereiteten Gleitkufen 3 ansich bekannte Gleitkufenschuhe 23 mit der notwendigen Steghöhendifferenz aufgesteckt und mit den Gleitkufen 3 gegebenenfalls unter erneuter Anwendung von Wärme und / oder Druck, notfalls unter Mitverwendung eines eventuell weiteren Haftvermittlers, verbunden werden. Die für die Herstellung des vorzugsweise gelenkigen Verschlusses 18 benötigten Leisten 15 werden dabei entweder werkstattseitig oder auf der Baustelle durch den beschriebenen Schweiß- oder Vulkanisationsvorgang mit dem Grundkörper 8 verbunden.

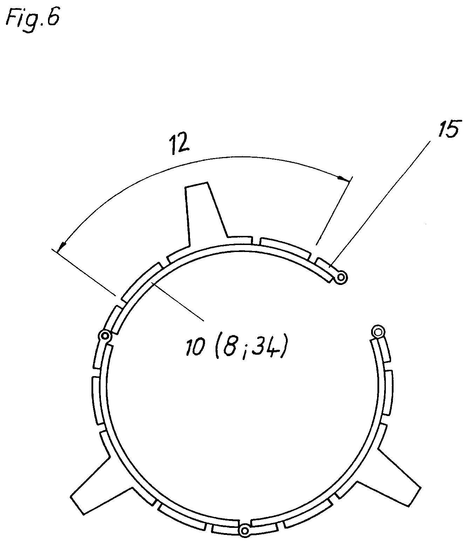

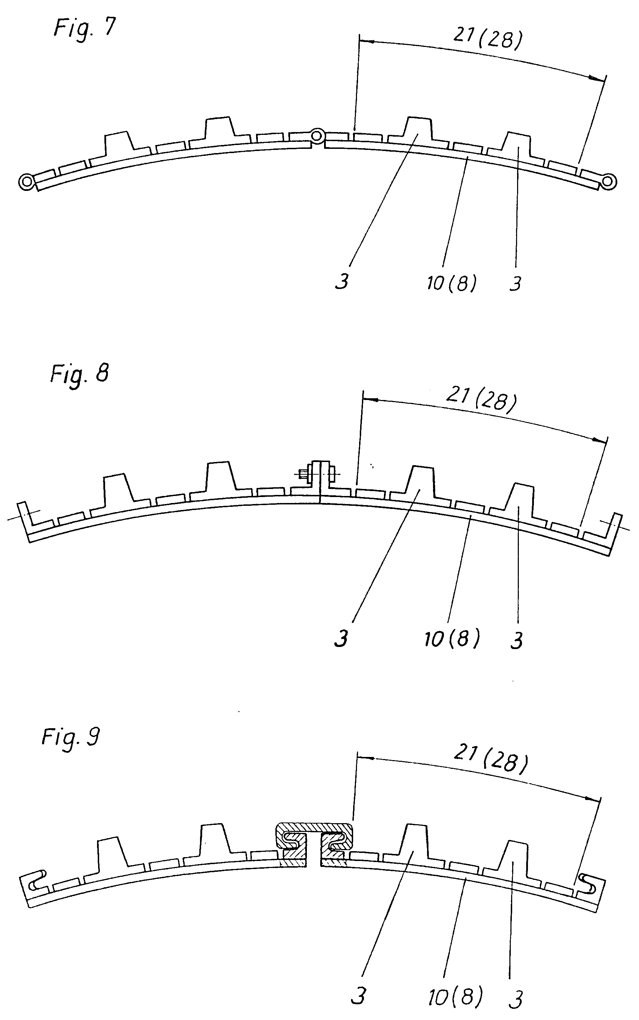

Fig 6 zeigt einen mehrteiligen, hier dreiteiligen Gleitkufenring 1, der dadurch hergestellt wird, daß von der Vorratsrolle des Grundkörpers 8 drei definierte Abschnitte 12 abgerollt und abgeschnitten werden, deren gestreckte ungespannte Länge jeweils um wenigstens das Breitenmaß von zwei Leisten 15 kürzer ist als die entsprechende Umfangsteillänge des Medienrohres 17. Die Enden der Abschnitte 12 werden in vorbeschriebener Weise mit den Leisten 15 verbunden und die so gebildeten Grundkörpersegmente 10 durch die Augen 13 der Ösen 14 durchdringende Stäbe 20 zu einem gelenkigen, offenen Gleitkufenband 34 ausgebildet, das um das Medienrohr 17 herumgelegt und wie beschrieben zu einem Gleitkufenring geschlossen und unter Zugspannung auf dem Medienrohr festgesetzt wird.

Werden auf die Gleitkufen 3 zuvor Gleitkufenschuhe 23 aufgesteckt und wie beschrieben mit diesen verbunden, kann gleichzeitig entschieden werden, ob alle Gleitkufenschuhe 23 gleiche Steghöhen aufweisen und dadurch das Medienrohr 17 im Schutzrohr zentrisch oder exzentrisch geführt werden soll, daß nur zwei einander benachbarte Gleitkufen 3 mit Gleitkufenschuhen 23 gleicher Steghöhe ausgestattet werden.

Die Fig. 7 bis 9 zeigen zwei Grundkörpersegmente 10 ( 8 ), wobei jedes Grundkörpersegment 10 mit zwei Gleitkufen 3 oder mit einer jeweils zwei Gleitkufen 3 aufweisenden Kunststoffschale 21 ( 28 ) sowie den Verschlußleisten 15, 26, 27 versehen ist. Da jedes Grundkörpersegment 10 ein definierter Abschnitt 12 eines mit Gleitkufen 3 geringster Steghöhe versehenen Grundkörpers 8 ist, kann auch hier wieder über die Steghöhendifferenz der aufzusteckenden Gleitkufenschuhe 23 entschieden werden, ob das Medienrohr 17 zentrisch oder exzentrisch im Schutzrohr, der Durchführung od. dgl. geführt werden soll.

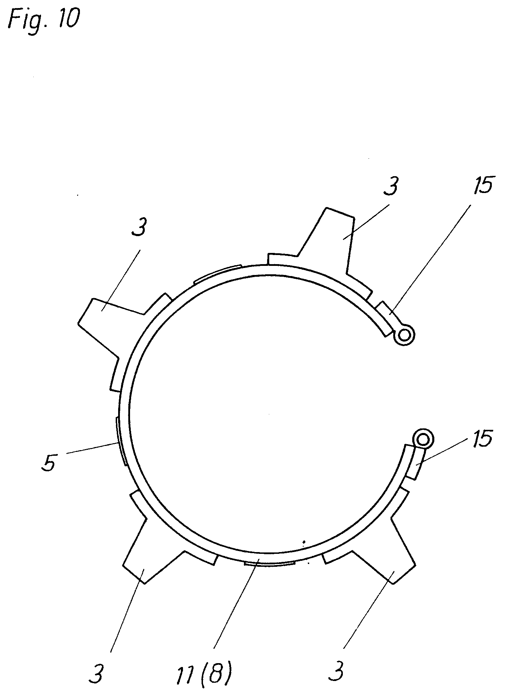

In Fig. 10 ist ein einteiliger Gleitkufenring 1 mit vier Gleitkufen dargestellt, wobei die mögliche Längenausdehnung des Grundkörpers durch Längenausdehnungsbegrenzer 5, die auf der Ober- und / oder Unterseite des Grundkörpers 8 bzw. Abschnitts 11 angebracht oder in diesen eingebracht sind, begrenzbar ist.

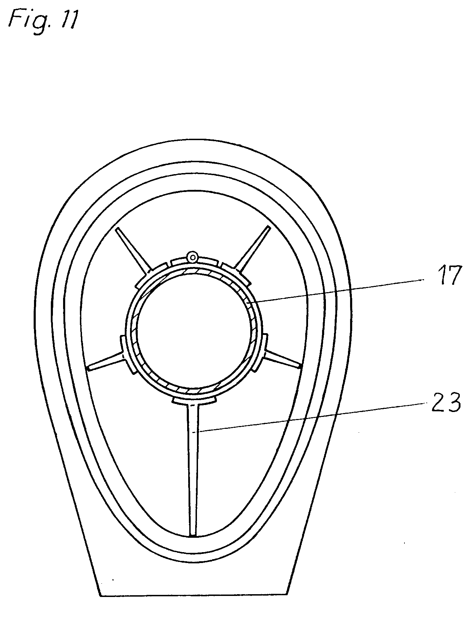

Fig 11 zeigt den einteiligen Gleitkufenring 1 gemäß Fig 10 als exzentrische Führung des Medienrohres 17 in einer eiförmigen Durchführung, einem eiförmigen Sammler od. dgl. mit unterschiedlichen Steghöhendifferenzen; auf die untere Gleitkufe 23 könnte dabei auch verzichtet werden.

Weitere Ausgestaltungen der Erfindung sind den Patentansprüchen zu entnehmen.

## Patentansprüche

1. Gleitkufenring für Rohr-in-Rohr-Systeme, Rohrdurchführungen od. dgl., der auf seinem Rücken mit parallel und im Abstand voneinander axial verlaufenden Gleitkufen versehen ist, deren Material einen möglichst geringen Reibungskoeffizienten aufweist, z.B. ein Polyethylen, Polyamid od. dgl. ist, wobei der Gleitkufenring auf dem Medienrohr festsetzbar ist und dieses im Schutzrohr, der Durchführung od. dgl. führt bzw. zentriert, **dadurch gekennzeichnet**, daß die einander benachbarten Gleitkufen ( 3 ) eines Gleitkufenringes ( 1 ), die Gleitkufen ( 3 ) eines Ringsegments ( 2 ) sowie die einander benachbarten Ringsegmente ( 2 ) durch einen elastischen, flexiblen, dehnbaren und rückstellbaren Teil ( 4 ) verbunden sind, daß der Teil ( 4 ) gummielastisch ausgebildet und mit den Gleitkufen ( 3 ) bzw. mit den mit den Gleitkufen eine Einheit bildenden Kunststoffschalen ( 21, 28 ) und / oder den Ringsegmenten ( 2 ) durch einen Schweiß- bzw. einen Vulkanisationsvorgang und / oder mechanisch verbunden ist, wobei der Gleitkufenring ( 1 ) entweder einteilig, einen einzigen Verschluß ( 18 ) aufweisend ausgebildet und ein definierter Abschnitt ( 11 ) eines zu einer Rolle aufgewickelten band- oder bandagenartigen, gummielastischen Grundkörpers ( 6, 8 ) oder zwei-, drei- bzw. mehrteilig, mehrere Verschlüsse ( 18 ) aufweisend ausgebildet und jedes Gleitkufenringteil ( 2 ) ein definierter Abschnitt ( 12 ) des zu einer Rolle aufgewickelten, gummielastischen Grundkörpers ( 8 ) ist, von dem bedarfsgemäß die definierten Abschnitte ( 11, 12 ) abrollbar und abschneidbar sowie an deren beiden Enden mit je einem Verschlußstück ( 7, 15, 18, 19, 26, 27 ) versehbar sind, durch das entweder das einteilige, offene Gleitkufenband ( 34 ) auf dem Medienrohr ( 17 ) zu einem einen einzigen Verschluß ( 18 ) aufweisenden Gleitkufenring ( 1 ) oder die Ringsegmente ( 2 ) bzw. die Grundkörpersegmente ( 9, 10 ) über ihre Verbindungsstücke ( 19 ) zu einem zwei-, drei- oder mehrteiligen, offenen Gleitkufenband ( 1 ) zusammensetzbar und auf dem Medienrohr ( 17 ) durch Verbinden der beiden letzten Verschlußstücke ( 18 ) zu einem zwei drei oder mehrere Verschlüsse ( 18, 19 ) aufweisenden Gleitkufenring ( 1 ) ausbildbar und unter Zugspannung festsetzbar ist.

2. Gleitkufenring nach Anspruch 1, **dadurch gekennzeichnet**, daß die Kunststoffschalen ( 21, 28 ) ebenso wie die Verschluß- und Verbindungsstücke ( 7, 15, 18, 19, 26, 27 ) mit dem Grundkörper ( 6, 8 ), den Abschnitten ( 11, 12 ), den Grundkörpersegmenten ( 9, 10 ) oder den Ringsegmenten ( 2 ) durch einen Schweiß- oder Vulkanisationsvorgung unter Anwendung von Wärme und / oder Druck und eventueller Mitverwendung eines Haftvermittlers und / oder mechanisch verbindbar sind.

3. Gleitkufenring nach den Ansprüchen 1 und 2, **dadurch gekennzeichnet**, daß die einander benachbarten Gleitkufen ( 3 ) aus hochfestem, verschleißarmem Kunststoff, der einen geringen Reibungskoeffizienten aufweist, ebenso wie die den Gleitkufen ( 3 ) benachbarten Verschlußleisten ( 15, 26, 27 ) durch einen gummielastischen Teil ( 4 ) verbunden und die Verschlußleisten (15, 26, 27 ) derart an dem Teil ( 4 ) angeordnet sind, daß sie mit diesem dadurch eine bauliche Einheit bilden, daß sie an den Teil ( 4 ) angeformbar oder mit diesem nachträglich mittels eines Schweiß- oder Vulkanisationsvorgangs unter Anwendung von Wärme und / oder Druck, gegebenfalls unter Mitverwendung eines Haftvermittlers, eines Vulkanisationsbeschleunigers und / oder eines Aktivators, z. B. mit dem Teil ( 4 ) verschmelzend, verbindbar und die gummielastischen Ringsegmente ( 2 ) auf der Baustelle zu zwei-, drei- oder mehrteiligen Gieitkufenringen zusammensetzbar und auf dem Medienrohr unter Zugspannung festsetzbar sind.

4. Gleitkufenring nach den Ansprüchen 1 und 2, **dadurch gekennzeichnet**, daß zwischen den Gleitkufen ( 3 ) der mit dem Grundkörper ( 6, 8 ) verbundenen Kunststoffschalen ( 21, 28 ) ebenso wie zwischen den Gleitkufen ( 3 ) und den ihnen benachbarten Verschlußleisten ( 26, 27 ) oder Verschlußstücken ( 7, 15, 18, 19 ) Trennfugen ( 22 ) wählbarer Breite, den Grundkörper ( 6, 8 ) nicht verletzend, anbringbar sind.

5. Gleitkufenring nach den Ansprüchen 1 bis 4, **dadurch gekennzeichnet**, daß die den Ringsegmenten ( 2 ), dem Grundkörper ( 6 ), den Grundkörpersegmenten ( 9, 10 ) bzw. den Abschnitten ( 11, 12 ) zuordbaren Verschlußstücke ( 7 ) entweder Leisten ( 15 ) sind, die mit Augen ( 13 ) aufweisenden Ösen ( 14 ) versehen sind, die verzahnend mit den ihnen benachbarten Ösen des nächsten Grundkörpersegments ( 9, 10 ) bzw. denjenigen des anderen Endes des Grundkörpers ( 6 ) ineinandergreifen und gemeinsam mit dem die Augen ( 13 ) der Ösen ( 14 ) durchdringenden Stab ( 20 ), der beispielsweise aus einem hochfesten, nicht leietenden Material besteht, einen gelenkigen Versschluß ( 18 ) bzw. eine gelenkige Verbindung bilden, oder die Verschlußstücke ( 7 ) Verschlußleisten ( 26, 27 ) sind, über die die Enden des Grundkörpers ( 6 ) bzw. diejenigen des einteiligen Gleitkufenringes ( 1 ) oder diejenigen einander benachbarter Grundkörpersegmente ( 9, 10 ) in ansich bekannter Weise miteinander verschraub- oder verkeilbar sind, wobei die Verschlußstücke ( 7 ) aus dem Material des Grundkörpers (6, 8 ) bzw. demjenigen der Grundkörpersegmente ( 9, 10 ), dem Material der Kunststoffschalen ( 21, 28 ) oder dem Material der Gleitkufen ( 3 ) bestehen.

6. Gleitkufenring nach einem oder mehreren der Ansprüche 1 bis 5, **dadurch gekennzeichnet**, daß die Steghöhe ( H ) der Gleitkufen ( 3 ) unter Einbeziehung der Dicke (B) des Grundkörpers ( 8 ) die kleinstmögliche Steghöhe ist und die tatsächlich benötigte Steghöhe dadurch herstellbar ist, daß auf die Gleitkufen ( 3 ) ansich bekannte Gleitkufenschuhe ( 23 ) mit wählbarer Steghöhe dadurch unverlierbar aufsteckbar sind, daß die Seiten ( 39, 40 ) der Gleitkufenstege ( 41 ) ebenso wie die Unterseite der Streifen (16) der Leisten ( 15 ) mit einer Auflage ( 24 ), die vorzugsweise aus dem Material des Grundkörpers ( 8 ) besteht, versehbar sind, die durch einen Schweiß- oder Vulkanisationsvorgang unter Anwendung von Wärme und / oder Druck, notfalls unter Mitverwendung eines Haftvermittlers, einerseits mit den Gleitkufen ( 3 ) und den Gleitkufenschuhen ( 23 ) und andererseits mit dem Grundkörper ( 6 ) bzw. den Grundkörpersegmenten ( 9, 10 ) verbindbar ist.

7. Gleitkufenring nach den Ansprüchen 1 bis 6, **dadurch gekennzeichnet**, daß der endlose, band- oder bandagenartige Grundkörper auf seiner Oberseite eine definierte Anzahl von im Querschnitt beispielsweise pilzartigen Noppen ( 30 ) aufweist, die in definiertem Abstand voneinander angeordnet und denen in den Gleitkufen ( 3 ), dem Teil ( 4 ) bzw. in den Kunststoffschalen ( 21, 28 ) vorgesehene Öffnungen ( 31 ) in Anzahl, Querschnitt und Anordnund kongruent sind, die im oberen Bereich eine Vergrößerung ( 32 ) aufweisen, in die die hutartig vergrößerten Spitzen der Noppen ( 30 ) einschnappen, wobei die Gleitkufen ( 3 ), der Teil ( 4 ) bzw. die Kunststoffschalen ( 21 und 28 ) zusätzlich durch einen Schweiß- oder Vulkanisationsvorgang unter Anwendung von Wärme und / oder Druck, notfalls unter Mitverwendung eines Haftvermittlers, mit dem Grundkörper ( 8 ) verbindbar sein können.

8. Gleitkufenring nach einem oder mehreren der Ansprüche 1 bis 7, **dadurch gekennzeichnet**, daß die Gleitkufen ( 3 ), die Gleitkufenschuhe ( 23 ) und / oder die Schalen ( 21, 28 ) aus einem Polyethylen hoher Dichte ( PE-HD ), einem Polyethylentherephthalat ( PETP ), einem Polybutylenterephthalat ( PBTP ), einem Polypropylen od. dgl, oder einem Polyester auf der Basis von Ethylenglykol und 2,6-Naphthalindicarbonsäure, einem Polyarylat, beispielsweise auf der Basis von Diphenolen und aromatischen Dicarbonsäuren oder einem Polyester auf der Basis einer 4-Hydroxybenzoesäure als einheitlichem Monomeren bestehen, während das Ringsegment ( 2 ), der Teil ( 4 ) und / oder der Grundkörper ( 8 ) aus einem Elastomer, vorzugsweise einem Kautschuk, insbesondere einem Siliconkautschuk bestehen, wobei der Siliconkautschuk notfalls durch Carborane modifizierbar oder der Teil ( 4 ) aus einem Blockpolymer bzw. die Kunststoffschalen ( 21, 28 ) aus dem Material der Gleitkufen ( 3 ) herstellbar sind.

9. Gleitkufenring nach einem oder mehreren der Ansprüche 1 bis 8, **dadurch gekennzeichnet**, daß die Ringsegmente ( 2 ), die Teile ( 4 ), die Grundkörper ( 6, 8 ), die Grundkörpersegmente ( 9, 10 ) bzw. die Abschnitte ( 11, 12 ) gummielastisch ausgebildet, ihre möglichen Längenausdehnungen durch jeweils einen, zwei oder mehrere Längenausdehnungsbegrenzer ( 5 ) definierbar und diese an ihren Ober- und / oder Unterseiten anordbar bzw. in diesen einbettbar sind.

10. Gleitkufenring nach einem oder mehreren der Ansprüche 1 bis 9, **dadurch gekennzeichnet**, daß zur Verbesserung der Selbsthaftung des Gleitkufenrings ( 1 ) auf insbesondere glatten Medienrohren ( 17 ) die den Gleitkufenring ( 1 ) bildenden Ringsegmente ( 2 ), Teile ( 4 ), Grundkörper ( 6, 8 ), Grundkörpersegmente ( 9, 10 ) bzw. Abschnitte ( 11, 12 ) auf ihrer dem Medienrohr ( 17 ) zugewandten Seite mit Saugnäpfen versehbar sind, die an diese Seite anformbar, einformbar oder nachträglich anbringbar sind.

11. Verfahren zur Herstellung eines Gleitkufenringes nach einem oder mehreren der Ansprüche 1 bis 10, **dadurch gekennzeichnet,** daß man einen band- oder bandagenartigen Grundkörper ( 8 ) elastisch, flexibel, dehnbar und rückstellbar, gummielastisch ausbildet, ihm einseitig unter Einbeziehung von Gleitkufen aufweisenden Kunststoffschalen ( 21, 28 ) Gleitkufen ( 3 ) zuordnet, diese in parallelem Abstand voneinander quer zur Längserstreckung des Grundkörpers ( 8 ) anordnet und auf diesem durch einen Vulkanisations- oder Schweißvorgang und / oder mechanisch festsetzt unter eventueller Mitverwendung eines Haftvermittlers, daß man den Gleitkufen ( 3 ) unter Einschluß der Dicke ( B ) des Grundkörpers ( 8 ) eine Steghöhe ( H ) zuordnet, die die kleinstmögliche Steghöhe ist, daß man bei einem mit Kunststoffschalen ( 21, 28 ) versehenen Grundkörper ( 8 ) zwischen den Gleitkufen ( 3 ) einerseits sowie den Gleitkufen und dem jeweiligen Schalenende andererseits eine, zwei oder mehrere Trennfugen ( 22 ) wählbarer Breite, den Grundkörper nicht verletzend, anbringt, daß man den so ausgestalteten Grundkörper ( 8 ) zur Lagerhaltung zu einer Rolle aufwickelt und von dieser bedarfsgemäß definierte Abschnitte ( 11, 12 ) abrollt und abschneidet, diese an ihren Enden unter Anwendung von Wärme und / oder Druck durch einen Vulkanisations- oder Schweißvorgang mit Verschlußstücken ( 18 ) bzw. Verbindungsstücken ( 19 ), eventuell unter Mitverwendung eines Haftvermittlers, verbindet derart, daß man aus dem Abschnitt ( 11 ) einen einteiligen Grundkörper ( 6 ) herstellt, dessen gestreckte ungespannte Länge um wenigstens die Breite von zwei Verschlußstücken kürzer ist als der Außenumfang des mit Gleitkufenringen zu bestückenden Medienrohres ( 17 ), daß man aus den Abschnitten ( 12 ) beidseitig Verbindungsstücke aufweisende Grundkörpersegmente ( 9, 10 ) herstellt und zwei, drei oder mehrere Grundkörpersegmente ( 9, 10 ) über ihre Verbindungsstücke miteinander verbindet, wobei die gestreckte ungespannte Länge eines jeden Grundkörpersegments um wenigsten die Breite von zwei Verbindungsstücken kürzer ist als die entsprechende Teilumfangslänge des Medienrohres ( 17 ), daß man bei nicht ausreichender Steghöhe der Gleitkufen ( 3 ) auf diese Gleitkufenschuhe ( 23 ) aufsteckt und mit den Gleitkufen unter Anwendung von Wärme und / oder Druck durch einen Vulkanisations- oder Schweißvorgang, eventuell unter Mitverwendung eines Haftvermittlers, verbindet und so den Grundkörper ( 6 ) in ein offenes einteiliges Gleitkufenband ( 34 ) und die miteinander verbundenen Grundkörpersegmente ( 9, 10 ) in ein offenes, zwei-, drei oder mehrteiliges Gleitkufenband ( 34 ) umwandelt, das man auf der Baustelle um das Medienrohr herumlegt und das einteilige Gleitkufenband durch Verbinden seiner beiden Verschlußstücke zu einem einteiligen einen einzigen Verschluß aufweisenden Gleitkufenring ( 1 ) und das zwei-, drei- oder mehrteilige Gleitkufenband durch Verbinden seiner beiden letzten Verbindungsstücke zu einem zwei, drei oder mehrere Verschlüsse aufweisenden Gleitkufenring ( 1 ) ausbildet und unter Zugspannung auf dem Medienrohr ( 17 ) festsetzt.

12. Verfahren nach Anspruch 11, **dadurch gekennzeichnet**, daß man auf der Oberseite des Grundkörpers ( 8 ) eine definierte Anzahl von im Querschnitt vorzugsweise pilzförmiger Noppen ( 30 ) in definiertem Abstand voneinander anordnet, daß man die Gleitkufen ( 3 ), den Teil ( 4 ) bzw. die Kunststoffschalen ( 21, 28 ) mit Öffnungen (31) versieht, die dem Querschnitt, der Anzahl und Anordnung der Noppen ( 30 ) kongruent sind, und daß man die Gleitkufen ( 3 ), den Teil ( 4 ) bzw. die Kunststoffschalen ( 21, 28 ) über die die Öffnungen ( 31 ) durchdringenden Noppen ( 30 ) auf dem Grundkörper (8) festsetzt, wobei man die Öffnungen ( 31 ) in ihrem oberen Bereich mit einer Vergrößerung ( 32 ) versieht, in die man die hutartig vergrößerten Spitzen der Noppen ( 30 ) einschnappen läßt.

13. Verfahren nach Anspruch 11 und 12, **dadurch gekennzeichnet**, daß man die Rückseite der Gleitkufen ( 3 ) bzw. diejenige der Kunststoffschalen ( 21, 28 ) oberflächig erwärmt, mit der erwärmten Fläche auf die Oberseite des eventuell zuvor erwärmten Grundkörpers ( 8 ) aufsetzt und derart mit dem Grundkörper ( 8 ) verbindet, daß man unter bevorzugte Anwendung von Druck einen Schweiß- oder Vulkanisationsvorgang auslöst und, gegebenenfalls unter Mitverwendung eines Haftvermittlers, eines Vulkanisationsbeschleunigers und / oder eines Aktivators od. dgl., vollständig oder teilweise abschließt, daß man die Rückseite der Verschlußstücke ( 7 ), der Leisten ( 15 ) bzw. diejenige der Verschlußleisten ( 26, 27 ) oberflächig erwärmt und mit einer eventuell zuvor erwärmten Auflage ( 24 ) kaschiert derart, daß man unter bevorzugter Anwendung von Druck zwischen den Teilen ( 7, 15, 26, 27 ) und der Auflage ( 24 ) einen Schweiß- oder Vulkanisationsvorgang, gegebenenfalls unter Mitverwendung eines Haftvermittlers, eines Vulkanisationsbeschleunigers und / oder eines Aktivators, auslöst und vollständig oder teilweise abschließt, und daß man die Teile ( 7, 15, 26, 27 ) mit ihrer durch die Auflage ( 24 ) kaschierten Fläche auf die Enden der Grundkörper ( 6 ) bzw. diejenige der Grundkörpersegmente ( 9, 10 ) aufsetzt und mit diesen unter eventuell erneuter Zufuhr von Wärme und Anwendung von Druck, notfalls unter Mitverwendung eines weiteren Haftvermittlers, durch Auslösen und Abschließen eines Schweiß- oder Vulkanisationsvorgangs verbindet, daß man die mit kleinstmöglicher Steghöhe ausgebildeten Gleitkufen ( 3 ) oberflächig erwärmt und mit einer eventuell zuvor ebenfalls erwärmten und vorzugsweise die Seiten ( 39, 40 ) der Gleitkufenstege ( 41 ) überdeckenden Auflage ( 24 ) versieht dadurch, daß man unter Anwendung von Druck, gegebenenfalls unter Mitverwendung eines Haftvermittlers, eines Vulkanisationsbeschleunigers und / oder eines Aktivators einen Schweiß- oder Vulkanisationsvorgang auslöst und vollständig oder teilweise abschließt, und daß man dann auf die so vorbereiteten Gleitkufen ansich bekannte Gleitkufenschuhe ( 23 ) aufsteckt, diese eventuell zuvor erwämt und unter Anwendung von Druck und notfalls erneuter Wärmezufuhr sowie gegebenenfalls unter Mitverwendung eines weiteren Haftvermittlers, eines Vulkanisationsbeschleunigers und / oder eines Aktivators mit den Gleitkufen ( 3 ) verbindet durch Auslösen und Abschließen eines Vulkanisations- oder Schweißvorgangs.

14. Verfahren nach einem oder mehreren der Ansprüche 11 bis 13, **dadurch gekennzeichnet**, daß man auf der Oberseite des band- oder bandagenartigen, gummielastischen Grundkörpers ( 8 ) die bisher verwendeten, wenigstens eine Gleitkufe ( 3 ) und zwei Verschlußleisten ( 26, 27 ) aufweisenden Kunststoffschalen ( 21, 28 ) mittels eines Vulkanisations- oder Schweißvorgangs festsetzt unter Anwendung von Wärme und / oder Druck, gegebenenfalls unter Mitverwendung eines Haftvermittlers, eines Vulkanisationsbeschleunigers und / oder eines Aktivators, daß man die Kunststoffschalen ( 21, 28 ) parallel zu ihren Gleitkufen ( 3 ) mit Trennfugen ( 22 ) wählbarer Breite, den Grundkörper ( 8 ) nicht verletzend, versieht derart, daß man jede Kunststoffschale ( 21, 28 ) in zwei, drei oder mehrere Schalensegmente ( 29 ) unterteilt und den so ausgebildeten Grundkörper ( 8 ) zu Zwecken der Lagerhaltung zu einer Vorratsrolle aufwickelt und von dieser bedarfsgemäß so viele definierte Abschnitte ( 12 ) abrollt und abschneidet, deren ungestreckte Länge derjenigen der Kunststoffschalen ( 21, 28 ) entspricht, wie mit Verschlußleisten ( 26, 27 ) versehene Grundkörpersegmente ( 9, 10 ) zur Herstellung von zwei-, drei- oder mehrteiligen Gleitkufenringen ( 1 ) benötigt werden, daß man die einen Gleitkufenring ( 1 ) bildenden Grundkörpersegmente ( 9, 10 ) auf der Baustelle lose miteinander über ihnen zugeordnete Verbindungsteile verbindet und das offene Segmentband um das Medienrohr herumlegt und durch Verschrauben bzw. Verkeilen der beiden letzten Verschlußleisten den Gleitkufenring schließt, und daß man dann die Schrauben mit zugehörigen Muttern bzw. die Keile in ihre Endposition bringt und den Gleitkufenring unter Zugspannung auf dem Medienrohr festsetzt.

15. Verfahren nach einem oder mehreren der Ansprüche 11 bis 14, **dadurch gekennzeichnet**, daß man die mit den Gleitkufen ( 3 ) bzw. den Kunststoffschalen ( 21, 28 ) sowie den Verschlußstücken ( 26, 27 ) kaschierbare Auflage ( 24 ) als Haftvermittler verwendet und in ihr unter Anwendung von Wärme und / oder Druck einen Vulkanisations- oder Schweißvorgang auslöst und gesteuert vollständig oder teilweise abschließt.

16. Verfahren nach einem oder mehreren der Ansprüche 11 bis 15, **dadurch gekennzeichnet**, daß man zur Begrenzung der möglichen Längenausdehnung der gummielastischen Ringsegmente ( 2 ), Teile ( 4 ), Grundkörper ( 6, 8 ), Grundkörpersegmente ( 9, 10) bzw. Abschnitte ( 11, 12 ) einen, zwei oder mehrere Längenausdehnungsbegrenzer ( 5 ) an deren Ober- und / oder Unterseite anordnet oder in diese einbettet.

17. Verfahren nach einem oder mehreren der Ansprüche 11 bis 16, **dadurch gekennzeichnet**, daß man an der dem Medienrohr ( 17 ) zugewandten Seite der den Gleitkufenring bildenden Ringsegmente ( 2 ), der Teile ( 4 ), der Grundkörper ( 6, 8 ), der Grundkörpersegmente 8 9, 10 ) bzw. der Abschnitte ( 11, 12 ) Saugnäpfe anformt, einformt oder nachträglich anbringt.
